Europäisches Patentamt

European Patent Office

Office européen des brevets

(11) Numéro de publication : **0 446 151 B1**

(12) **FASCICULE DE BREVET EUROPEEN**

(45) Date de publication du fascicule du brevet :
**25.08.93 Bulletin 93/34**

(51) Int. Cl.⁵ : **A23L 2/04,** A23L 1/221,
A23L 2/26, A23L 1/36,
A23C 11/10, C11B 1/06

(21) Numéro de dépôt : **91420060.5**

(22) Date de dépôt : **21.02.91**

(54) **Procédé pour obtenir des jus, des huiles et des tourteaux, directement stables, par pressage de produits biologiques frais.**

(30) Priorité : **06.03.90 FR 9003069**

(43) Date de publication de la demande :
**11.09.91 Bulletin 91/37**

(45) Mention de la délivrance du brevet :
**25.08.93 Bulletin 93/34**

(84) Etats contractants désignés :
**BE CH DE ES FR GB IT LI**

(56) Documents cités :
**CH-A- 246 247
FR-A- 2 064 670
FR-A- 2 609 870
US-A- 4 089 985
US-A- 4 639 374**

(73) Titulaire : **GATTEFOSSE S.A.
36 chemin de Genas
F-69800 Saint Priest (FR)**

(72) Inventeur : **Bousser, Robert
13 rue Bassano
F-75016 Paris (FR)**

(74) Mandataire : **Laurent, Michel et al
Cabinet LAURENT et CHARRAS, 20, rue Louis
Chirpaz B.P. 32
F-69131 Ecully Cedex (FR)**

Jouve, 18, rue Saint-Denis, 75001 PARIS

## Description

L'invention concerne un procédé pour obtenir des jus, des huiles et des tourteaux directement stables par pressage de produits biologiques frais. Elle concerne également les jus, les huiles et les tourteaux ainsi obtenus.

L'invention concerne plus particulièrement un procédé qui facilite l'extraction et la séparation des jus, des huiles et des tourteaux, et qui permette automatiquement de stabiliser en même temps les produits résultant de ce pressage.

Si dans la suite de la description et dans les revendications, le plus généralement, l'invention est décrite dans son application aux produits d'origine végétale, tels que les plantes, les fruits, les légumes ou les épices, elle peut être également mise en oeuvre avec des produits d'origine animale.

Il est bien connu, notamment en oenologie, dans l'industrie des jus de fruits, en sucrerie ou dans les huileries, d'extraire des jus, des huiles et des tourteaux.

Le plus généralement, on broie préalablement la matière, dont on extrait les jus par pressage. L'action de broyage, puis de pressage font éclater les cellules, les vident de leur contenu (cytoplasme) et évacuent ce contenu en même temps que l'eau intersticielle du produit.

Plus le cytoplasme est fluide, plus l'eau intersticielle est abondante et plus l'extraction est facile. Tel est le cas pour le raisin, l'orange, etc .

En revanche si, comme c'est fréquemment le cas, le cytoplasme est plus ou moins visqueux parce que beaucoup de ses molécules sont des colloïdes (protéines, aminoacides, gommes, pectine, cellulose, etc.) qui gonflent et donnent des gels plus ou moins épais avec l'eau vacuolaire et intersticielle, l'extraction est plus difficile. C'est le cas avec les pommes, les coings, la canne à sucre, etc. .

Il en est de même dans le cas où le cytoplasme comporte beaucoup de matières grasses, particulièrement émulsionnées avec l'eau. C'est le cas de la pulpe d'olives, de la pulpe de la noix de coco, etc. .

Un des remèdes à ces difficultés consiste à "casser" au mieux les gels et émulsions s'ils ne sont pas trop importants - après broyage et avant pressage - en réalisant une sérieuse "trituration", en principe avec des meules tournantes (pommes, olives, canne à sucre, etc.).

Si ces gels et émulsions sont très liés et sont particulièrement importants (dans les produits oléagineux), une autre solution consiste à les déshydrater en séchant les produits correspondants (cas de la noix de coco qu'on sèche pour aboutir au coprah, de l'arachide, etc.). Mais ce faisant, on tombe sur un autre inconvénient que l'on retrouve d'ailleurs dans les produits qui sèchent naturellement (arachides, noix, etc.), et qui provient du fait que l'eau vacuolaire et intersticielle est, alors, peu abondante, d'où encore difficulté d'extraction. On y remédie en utilisant des appareillages de pressage à très fortes pressions, dénommés "expellers", qui sont très coûteux ou bien en utilisant des techniques d'extraction par solvants, assez sophistiquées et, elles aussi, onéreuses. De plus, les huiles obtenues par ces procédés (à partir de produits souvent mal séchés ou à partir de solvants) doivent, à peu près obligatoirement être "raffinées", c'est-à-dire subir de nouvelles techniques sophistiquées, coûteuses et très contraignantes, donc au détriment, un peu plus, de leur intégrité. Dans ce cas, là aussi, les tourteaux résultants ne peuvent être utilisés, au mieux, que pour l'alimentation animale, comme engrais ou comme combustibles.

Il est enfin à noter que dans tous les cas d'extraction, les produits obtenus ne sont pas stables en l'état et qu'ils doivent être stabilisés d'une façon ou d'une autre : par fermentation alcoolique (vin), par pasteurisation (jus de fruits), par déshydratation (huiles, tourteaux), etc. . D'une façon générale, aussi, on ne récupère pas tous les produits, en particulier l'eau dans les huileries.

Dans le document US-A-4 089 985, on a décrit un procédé pour préparer un jus de papaye, qui consiste à mélanger des papayes fraîches avec de l'eau, du sucre, du miel, de l'acide citrique, du sel et de l'acide ascorbique puis à broyer le mélange et à l'homogénéiser pendant au moins dix minutes à une température d'au moins 91° C, puis simultanément pendant au moins trois minutes à pasteuriser ce mélange, qui peut être conservé à température ambiante ou congelé. Cette technique, qui donne d'excellents résultats avec le papaye, fait appel à des étapes coûteuses de chauffage et de pasteurisation.

L'invention pallie tous ces inconvénients. Elle vise un procédé pour obtenir des jus, des huiles et des tourteaux directement stables, par pressage de produits biologiques frais, et se <u>caractérise</u> en ce qu'il consiste, normalement :

- à ajouter à ces produits frais de deux fois à deux fois et demie la quantité d'eau contenue dans ces produits, un système dépresseur, desséchant et stabilisant, constitué par un mélange comprenant du dextrose, du saccharose et du sel, et dans lequel :
  . la proportion pondérale du dextrose est de l'ordre de trois fois celle du saccharose ;
  . le rapport pondéral entre les sucres et le sel est compris entre 7 et 7,5 ;
- puis, à soumettre l'ensemble à une action de broyage rapide et poussée, de manière à obtenir une purée ;

- et enfin, à presser cette purée, pour en obtenir des jus, des huiles et des tourteaux directement stables.

Dans ces conditions, d'une part, l'extraction des jus est facilitée (car le sel et les sucres, grâce à leurs pouvoirs osmotiques et leurs charges électriques, "cassent" sensiblement les gels et les émulsions) et, d'autre part, on obtient des jus, des huiles et des tourteaux stables (grâce aux pouvoirs dépressifs du sel et des sucres), donc faciles à conserver et présentant les propriétés essentielles des produits de départ, tant dans leur intégrité que dans leur intégralité.

Toujours dans ces conditions, la saveur introduite par le mélange est relativement neutre, c'est-à-dire, ni salée ni sucrée, les deux saveurs se neutralisant convenablement. Mais si l'on veut aboutir à une saveur plus sucrée, il suffit d'augmenter la proportion des sucres et diminuer celle du sel. Inversement, si l'on veut aboutir à une saveur plutôt salée, on diminuera légèrement la proportion des sucres et on augmentera celle du sel.

Les produits biologiques traités sont, normalement, fraichement récoltés (plantes) ou prélevés. Néanmoins, dans une variante, les plantes peuvent avoir été, au préalable, très légèrement fanées.

Comme déjà dit, il est important que les sucres soient constitués par un mélange de dextrose et de saccharose, dans lequel la proportion de dextrose soit de de l'ordre de trois fois celle du saccharose. On a observé que si ce rapport était inférieur à 2,5, la fonction réductrice de l'ensemble devenait insuffisante. En revanche, si cette proportion devient supérieure à 3,5 l'excès de dextrose ne se dissout plus, et la concentration en sucres de l'ensemble risque de devenir insuffisante. En dehors de ces normes, la stabilisation des produits risque donc de ne pas être assurée convenablement.

Dans une forme d'exécution avantageuse, partie du dextrose peut être remplacée par du gycérol. Cette substitution est intéressante pour les applications en cosmétologie, car elle permet d'améliorer le "toucher" sur la peau du produit obtenu. Si en théorie, la totalité du dextrose peut être remplacé par du glycérol, en pratique, pour ces applications, on obtient les meilleurs résultats en substituant en poids, 25 à 50 % du dextrose par du glycérol. En revanche, pour des applications alimentaires, comme prévu par la Loi, la proportion de glycérol ne doit pas excéder 5 % du poids total du produit fini, pour éviter des effets seconds (diarrhées..).

De même, il est important que la proportion quantitative de sucres par rapport au sel soit de l'ordre de sept à sept fois et demie, et de préférence comprise entre 7,2 et 7,3, pour obtenir un produit de saveur relativement neutre.

De même, pour que les gels et les émulsions soient cassés au maximum et pour que les produits résultants soient bien stabilisés, il est indispensable que la quantité du système dépresseur introduit soit de l'ordre de deux fois à deux fois et demie la quantité d'eau contenue dans les produits biologiques frais à traiter. Si le plus généralement, une quantité de l'ordre de deux fois est suffisante, notamment avec des produits biologiques relativement peu oxydables, en revanche, si le produit biologique est facilement oxydable, cette quantité sera légèrement supérieure et voisine de deux fois et demie.

Dans une forme d'exécution préférée, le mélange de sucres contient également du sorbitol, par exemple de l'ordre de 2 à 5 %. L'adjonction du sorbitol freine avantageusement l'action de brunissment non enzymatique (réactions de Maillard).

Dans une autre forme d'exécution avantageuse, on peut ajouter jusqu'à un pour cent (1 %) d'acide citrique, notamment pour diminuer le pH du mélange, ce qui favorise la stabilisation.

Lorsque l'on traite des produits biologiques très oxydables, avantageusement, lors du broyage caractéristique, on ajoute, dans le mélange, des traces de métabisulfite ou de tout autre agent anti-oxydant équivalent et autorisé.

De même, pour éviter tout risque d'apparition de moisissures sur les produits finis, phénomène assez classique sur les produits sucrés encore humides, tels que les confitures, on peut ajouter, dans le mélange, quelques traces d'acide sorbique ou de tout autre agent fongique équivalent et autorisé.

Pour atteindre de tels résultats, on peut adopter de façon avantageuse pour les systèmes dépresseurs, des proportions de l'ordre de :

| Composants | pour une saveur sucrée | pour une saveur légèrement salée |
|---|---|---|
| Dextrose | 68 % | 62,5 % |
| Saccharose | 23 % | 20 % |
| Sorbitol | 3 % | 3 % |
| Sel | 5 % | 13,5 % |
| Acide citrique | 1 % | 1 % |

la somme des constituants étant toujours égale à 100 %.

Comme déjà dit, partie appréciable (du quart à la moitié, de préférence le tiers) du dextrose peut être remplacé par du glycérol.

Dans une forme d'exécution avantageuse, le système depresseur comprend en poids, de l'ordre de :

. 62,5 % à 68 %, de préférence 64 % d'un mélange de dextrose et de glycérol, contenant au plus le tiers de glycérol,

. 20 % à 23 %, de préférence 20 % de saccharose,

. 3 % de sorbitol

. 5 à 13,5 % de chlorure de sodium, de préférence 12 %,

. 1 % d'acide citrique,

la somme des constituants étant toujours égale à 100 %.

Comme déjà dit, selon que l'on recherche une saveur plus ou moins sucrée, par exemple dans le cas où le produit final est destiné à la pâtisserie, on enrichit le système dépresseur en dextrose et saccharose. En revanche, si on recherche une saveur salée, par exemple pour des produits condimentaires ou culinaires, on augmente alors la proportion de sel.

Selon une caractéristique essentielle de l'invention, le mélange du système dépresseur sel/sucres avec le produit biologique à traiter, doit être effectué par une opération de broyage rapide. Par "broyage rapide", on désigne une action mécanique intense, destinée à rompre les molécules pour obtenir un mélange homogène, effectué à température ambiante, pendant une durée relativement brève, de l'ordre tout au plus de quelques minutes, et en pratique de l'ordre de la minute. Il importe que cette opération ne provoque pas un échauffement du mélange. On obtient de bons résultats en opérant par cisaillement à température ambiante, par exemple au moyen d'un broyeur à couteaux. Avantageusement, le mélange du système dépresseur et du produit biologique à traiter, est effectué lors de l'action même de broyage rapide, de manière à obtenir une purée et ce, sans faire appel à un apport extérieur calorifique.

Selon une autre caractéristique essentielle de l'invention, la purée obtenue après l'opération de broyage, est pressée pour en extraire les jus. Cette extraction se fait normalement par tous moyens simples, connus et appropriés. On peut faire appel par exemple à des presses ordinaires, à des décantations ou à des centrifugeuses. Il n'est pas nécessaire en général de faire appel à des appareillages puissants et coûteux. On améliore la phase d'extraction en laissant la purée se reposer à température ambiante avant l'extraction, par exemple au moins deux à trois heures. Cela, pour que les ingrédients mélangés aient le temps d'agir vis-à-vis des gels et des émulsions.

Si, le plus généralement, la phase de pressage est effectuée à température ambiante, dans certains cas, il peut être utile de réchauffer préalablement le mélange pour le porter à une température inférieure à 35° C, de préférence aux environs de 30 à 35° C, dans le cas notamment des produits oléagineux possédant une matière grasse à faible point de fusion. De ce fait, la matière grasse concernée est fluidifiée et peut être extraite facilement.

Si le produit, au départ, est naturellement peu humide, il peut être intéressant de l'humidifier convenablement pour faciliter l'extraction. Tel est le cas, par exemple, avec la noix de Kola, dont on peut envisager avec intérêt d'obtenir un "jus et un tourteau de noix de Kola". Dans ce cas, la quantité d'eau rajoutée (au moment du broyage) doit intervenir, bien entendu, dans le calcul de la quantité du dépresseur qui va entrer en jeu.

Ainsi, et en définitive, le processus d'extraction est facile et ne nécessite pas d'appareillage spécial. On peut même envisager de travailler des produits dont on n'avait pas l'habitude d'extraire des jus directs (plantes aromatiques, plantes médicinales, etc. ), d'où la possibilité d'ouvrir de nouveaux secteurs d'exploitation.

De plus, on obtient, comme déjà dit, des jus, des huiles et des tourteaux stables, directement, en l'état.

En particulier, pour ce qui concerne les huiles, on n'est pas astreint à les déshydrater complètement comme cela est classique, car l'eau restante a été inactivée par le mélange dépresseur. Même chose pour les tourteaux.

Selon les proportions de sucres et de sel, les produits obtenus sont plus ou moins sucrés ou plus ou moins salés ou neutres. Ainsi, on a pu obtenir d'excellents résultats non seulement avec des plantes condimentaires usuelles, tels que le basilic, l'estragon, etc. , mais aussi avec des algues, et également avec des fruits réputés difficiles, tel que la pulpe fraiche de la noix de coco (qui, à ce jour, nécessitait de faire appel à des machines puissantes, pour des rendements en jus relativement modestes), et ce sans observer de dégradations importantes et sans faire appel à des raffinages. En outre, les tourteaux obtenus sont parfaitement admissibles en cuisine et en patisserie et non, comme c'était le cas jusqu'à ce jour, utilisables seulement dans l'alimentation animale ou comme combustibles ou comme engrais.

Le procédé selon l'invention peut être appliqué à n'importe quel type de produit d'origine biologique, tels que des fruits, des légumes, des plantes aromatiques, des algues, des plantes condimentaires, des plantes médicinales, et également des produits oléagineux.

De plus, le procédé selon l'invention facilite également la phase ultérieure de séparation, qui consiste à séparer les différents éléments constitutifs des jus obtenus à partir des produits oléagineux. En effet, on sait que pour un produit oléagineux, cette séparation de la phase huileuse, de la phase aqueuse et de la phase mucilagineuse, est assez délicate à réaliser et nécessite parfois de faire appel à des appareillages complexes de double centrifugation, comme c'est le cas dans la noix de coco fraiche. Dans le cas d'extractions conformes à l'invention, on obtient des jus faciles à séparer par une simple décantation ou par une centrifugation modeste, du fait de la grande différence de densité entre les phases huileuses et les phases aqueuses sucrées et salées des jus obtenus.

Enfin, les stabilisations obtenues par ce procédé peuvent être confortées en plaçant les jus en résultant en régime de léger froid (réfrigération) et en séchant légèrement, notamment par voie naturelle, les tourteaux obtenus.

La manière dont l'invention peut être réalisée et les avantages qui en découlent ressortiront mieux des exemples de réalisation qui suivent.

Exemple 1 :

Dans un broyeur à couteaux de dix litres en acier inoxydable, on introduit un système dépresseur/extracteur contenant :

- **Dextrose** : 4,500 kilogrammes (Kg),(64 %)
- **Saccharose** : 1,400 Kg (20 %)
- **Sorbitol** : 0,210 Kg (3 %)
- **Sel** : 0,840 Kg (12 %)
- **Acide citrique** : 0,070 Kg (1 %).

  7,020 Kg

Dans ce système dépresseur, le rapport pondéral entre le dextrose et le saccharose est donc de 3,2 et le rapport pondéral entre les sucres et le sel est de 7,27.

On homogénise ce mélange en faisant tourner le broyeur à 2 000 tours/minute pendant vingt secondes.

A température ambiante, on ajoute 3, 500 Kg basilic frais à 92 % d'humidité (rapport pondéral entre le système dépresseur et l'eau du basilic égal à 2,18).

On fait ensuite tourner pendant deux minutes à 2000 tours/minute. On obtient une pâte très verte qu'on laisse reposer pendant deux heures.

On presse cette pâte avec une presse à scourtins et on obtient :
. 5,600 Kg d'un jus lourd et épais (sucré/salé)
. 4,850 Kg de tourteaux lourds (sucrés/salés)

Le jus obtenu est d'une belle couleur verte. Il offre un très bon parfum de basilic frais. Mis en bouteille, il est prêt à l'emploi, notamment comme condiment pour la cuisine.

Le tourteau est, lui aussi, d'un très joli vert et présente un très bon parfum de basilic. Il présente 40 % d'humidité. Pour plus de commodité, on le sèche sur plateaux dans une atmosphère légèrement ventilée à 25/30°C. On obtient près de 3,000 Kg de produit sec que l'on réduit en poudre, prête à l'emploi.

Exemple 2 :

Dans un broyeur de dix litres en acier inoxydable, on introduit un système dépresseur/extracteur contenant :

| | | | |
|---|---|---|---|
| . dextrose | : 1,770 | Kg | (68 %) |
| . saccharose | : 0,600 | Kg | (23 %) |
| . sorbitol | : 0,080 | Kg | (3 %) |
| . sel | : 0,130 | Kg | (5 %) |
| . acide citrique | : 0,020 | Kg | (0,72 %) |
| | 2 600 | Kg | |

Le rapport pondéral dextrose/saccharose est donc de 2,95.

On homogénise ce mélange en faisant tourner le broyeur à 2000 tours/minute pendant vingt secondes.

A température ambiante, on ajoute 3,000 Kg de pulpe de noix de coco, pelée, à 43 % d'humidité.

De la sorte, le rapport pondéral entre le système dépresseur et la quantité d'eau de la noix de coco est égal à deux (2).

On fait tourner pendant deux minutes à 2 000 tours/minute et on obtient une pâte blanche qu'on laisse reposer trois heures, à la température de 30/35°C.

On presse cette pâte avec une presse à scourtins et on obtient :

. 3,400 Kg d'un jus lourd et épais qui décante lentement (à température de 30/35°C) en :
   - huile vierge : 1,450 Kg
   - jus protéiné et sucré : 1,950 Kg
. 1,800 Kg de tourteau lourd, granulé, blanc et sucré.

L'huile vierge obtenue est blanche lorsqu'elle se fige et a un excellent goût et un parfum de noix de coco; elle est prête à l'emploi.

Le tourteau est blanc, granulé, encore un peu gras et sucré. Séché, il donne environ 1 100 grammes d'un produit sec très parfumé et assez analogue au "coco râpé", avec l'avantage supplémentaire d'être sucré. Ce tourteau est particulièrement recommandé en pâtisserie.

Le jus protéiné et sucré est mis en bouteille. Par dilution, il donne une excellente boisson, nutritive et parfumée à la noix de coco.

Exemple 3 :

Dans un broyeur à couteaux de dix litres en acier inoxydable, on introduit le système dépresseur/extracteur suivant (formule sucrée) :

| | | |
|---|---|---|
| . dextrose | : 3,100 | Kg |
| . saccharose | : 1,050 | Kg |
| . sorbitol | : 0,135 | Kg |
| . sel | : 0,225 | Kg |
| . acide citrique | : 0,045 | Kg |
| | 4,555 | Kg |

Le rapport pondéral dextrose/saccharose est donc de 2,95.

On homogénise ce mélange en faisant tourner le broyeur à 2 000 tours/minute pendant vingt secondes.

A température ambiante, on ajoute 2,000 kg de noix de Kola à 50 % d'humidité et 1,000 kg d'eau (50 % du poids de Kola), c'est-à-dire un poids total de 3,000 kg d'une humidité moyenne de 66 % (le système dépresseur représente 2,3 fois l'eau totale).

On fait tourner pendant trois minutes à 2 000 tours/minute et l'on obtient une pâte, couleur framboise, que l'on laisse reposer pendant deux heures.

On presse cette pâte avec une presse à scourtins et on obtient :

. 4,300 kg d'un jus lourd et épais (sucré)
. 2,900 kg de tourteaux granulés, lourds.

Le jus est d'une belle couleur framboise. C'est un sirop que l'on peut ou non filtrer, prêt à l'emploi après mise en bouteille et que l'on peut utiliser en stimulant, directement ou en solution.

Le tourteau est sucré et d'une belle couleur framboise. On le sèche et on le livre, prêt à l'emploi, tel que (en granulés) ou bien comprimé en tablettes à croquer ou en vrais comprimés à sucer. On peut l'utiliser en stimulant.

Exemple 4 :

On répète l'exemple 3 en remplaçant 1,000 Kg de dextrose par autant de glycérol pur.

Après pressage, on obtient un jus bourbeux que l'on clarifie par centrifugation. On obtient alors :
. 2,600 Kg d'un tourteau lourd, destiné à être mélangé (en proportions convenables conformes à la législation) à d'autres tourteaux alimentaires pour améliorer leur onctuosité et les rendre sensiblement stimulants ;
. 4,600 Kg d'un jus épais, que l'on clarifie à nouveau par centrifugation ; ce jus est parfaitement adapté pour la cosmétologie.

Exemple 5 :

On répète l'exemple 4 en remplaçant la phase de pressage par une centrifugation-essorage. On obtient la même quantité de jus épais.

Le procédé selon l'invention se caractérise, par rapport aux procédés exploités à ce jour par :
- sa simplicité de mise en oeuvre et sa rapidité ;
- la facilité d'extraction et de séparation des jus obtenus ;
- le fait que les produits obtenus sont stables directement ;
- l'amélioration et la valorisation des tourteaux.

Les jus, les huiles, les tourteaux ainsi obtenus peuvent trouver de nombreux débouchés, aussi bien dans le domaine alimentaire, que dans la cosmétologie.

## Revendications

1. Procédé pour obtenir des jus, des huiles et des tourteaux, directement stables, par pressage de produits biologiques frais, caractérisé en ce qu'il consiste :
   - tout d'abord, à ajouter à ces produits biologiques frais, de deux fois à deux fois et demie la quantité d'eau contenue dans ces produits, un système dépresseur constitué par un mélange comprenant du dextrose, du saccharose et du sel, et dans lequel :
     . la proportion pondérale du dextrose est de l'ordre de trois fois celle du saccharose ;
     . le rapport pondéral entre les sucres et le sel est compris entre 7 et 7,5 ;
   - puis, à soumettre l'ensemble à une action de broyage rapide et poussée, de manière à obtenir une purée ;
   - et enfin, à presser cette purée pour en obtenir des jus, des huiles et des tourteaux, directement stables.

2. Procédé selon la revendication 1, caractérisé en ce que les produits biologiques frais sont traités de suite après avoir été récoltés (plantes) ou prélevés.

3. Procédé selon la revendication 1, caractérisé en ce que le broyage rapide du mélange est effectué par cisaillement à température ambiante.

4. Procédé selon la revendication 1, caractérisé en ce que entre le quart et la moitié du dextrose est remplacé par du glycérol.

5. Procédé selon la revendication 1, caractérisé en ce que le système dépresseur contient également du sorbitol et de l'acide citrique.

6. Procédé selon la revendication 1, caractérisé en ce que le système dépresseur contient en poids :

- de 62,5 % à 68 %, de préférence 64 % d'un mélange de dextrose et de glycérol, contenant au plus le tiers de glycérol,
- de 20 à 23 % de saccharose, de préférence 20 %,
- 3 % de sorbitol,
- de 5 à 13,5 % de chlorure de sodium, de préférence 12 %,
- 1 % d'acide citrique,

la somme de ces constituants étant égale à 100 %.

7. Procédé selon l'une des revendications 4 et 6, caractérisé en ce que, lors du broyage, on ajoute au mélange des traces d'acide sorbique et/ou de métabisulfite.

8. Procédé selon la revendication 1, caractérisé en ce que le pressage de la purée pour en extraire des jus, des huiles et des tourteaux stables, s'effectue par des techniques usuelles, à une température inférieure à 35°C, de préférence au voisinage de la température ambiante.

9. Procédé selon la revendication 1, caractérisé en ce que les produits biologiques frais de départ sont préalablement humidifiés.

10. Procédé selon la revendication 1, pour extraire du jus, de l'huile et un tourteau stables de noix de coco, <u>caractérisé</u> en ce qu'il consiste :
    - à broyer de la pulpe de noix de coco fraiche ;
    - à mélanger à cette noix de coco de deux fois à deux fois et demie la quantité d'eau contenue dans celle-ci, un système dépresseur constitué par un mélange contenant :
        . 68 % d'un mélange de dextrose et de glycérol, contenant au plus le tiers de glycérol,
        . 23 % de saccharose,
        . 3 % de sorbitol,
        . 5 % de chlorure de sodium,
        . 1 % d'acide citrique,
    - puis, à broyer par cisaillement à température ambiante le mélange ainsi obtenu, jusqu'à obtenir une purée ;
    - enfin, à presser cette purée à température de 30 à 35 °C, pour obtenir un tourteau sucré et un jus que l'on sépare ensuite en huile vierge et en un sirop, prêts à l'emploi.

**Patentansprüche**

1. Verfahren zur Herstellung von unmittelbar stabilen Säften, Ölen und Preßrückständen durch Pressen von frischen biologischen Produkten, dadurch gekennzeichnet, daß es folgendes aufweist,
    - zunächst, Hinzufügen eines entziehenden Systems zu diesen frischen biologischen Produkten in zwei- bis zweieinhalbfacher Menge der in diesen Produkten enthaltenen Wassermenge, bestehend aus einer Mischung, die Dextrose, Saccharose und Salz enthält, und in der
        . der Gewichtsanteil der Dextrose etwa das Dreifache der Saccharose beträgt;
        . das Gewichtsverhältnis zwischen den Zuckern und dem Salz zwischen 7 und 7,5 liegt,
    - anschließend, Aussetzen des Gemenges einer raschen und stoßartigen Zerkleinerung derart, daß ein Brei erhalten wird;
    - und, schließlich, Pressen des Breis, um ummittelbar stabile Säfte, Öle und Preßrückstände zu erhalten.

2. Verfahren nach Anspruch 1, dadurch gekennzeichnet, daß die frischen biologischen Produkte sofort nachdem sie geerntet (Pflanzen) oder entnommen wurden, behandelt werden.

3. Verfahren nach Anspruch 1, dadurch gekennzeichnet, daß das rasche Zerkleinern des Gemenges durch Zerschneiden bei Umgebungstemperatur durchgeführt wird.

4. Verfahren nach Anspruch 1, dadurch gekennzeichnet, daß ein Viertel bis die Hälfte der Dextrose durch Glycerin ersetzt ist.

5. Verfahren nach Anspruch 1, dadurch gekennzeichnet, daß das entziehende System auch Sorbitol und Zitronensäure enthält.

6. Verfahren nach Anspruch 1, dadurch gekennzeichnet, daß das entziehende System folgendes in Gewichtsanteilen enthält:
   - 62,5 % bis 68 %, vorzugsweise 64 % einer Mischung an Dextrose und Glycerin, die höchstens ein Drittel an Glycerin enthält,
   - 20 bis 23 % , vorzugsweise 20 % Saccharose,
   - 3 % Sorbitol,
   - 5 bis 13,5 %, vorzugsweise 12 % Natriumchlorid,
   - 1 % Zitronensäure,
   wobei die Summe der Bestandteile jeweils 100 % beträgt.

7. Verfahren nach einem der Ansprüche 4 und 6, dadurch gekennzeichnet, daß beim Zerkleinern dem Gemenge Spuren an Sorbinsäure und/oder Metabisulfit hinzugefügt werden.

8. Verfahren nach Anspruch 1, dadurch gekennzeichnet, daß das Pressen des Breis, um daraus stabile Säfte, Öle und Preßrückstände zu extrahieren, anhand gebräuchlicher Techniken duchgeführt wird, und zwar bei einer Temperatur unterhalb von 35° C, vorzugsweise in der Nähe der Raumtemperatur.

9. Verfahren nach Anspruch 1, dadurch gekennzeichnet, daß die ausgänglichen frischen biologischen Produkte zuvor angefeuchtet werden.

10. Verfahren nach Anspruch 1, zum Extrahieren eines stabilen Säftes, Öls und Preßrückstandes von Kokosnüssen, dadurch gekennzeichnet, daß es folgendes aufweist:
    - Zerkleinern des Fruchtfleisches der frischen Kokosnuß;
    - Zumischen zu dieser Kokosnuß im zwei- bis zweieinhalbfachen der Wassermenge, die in dieser enthalten ist, eines entziehenden Systems, das aus einer Mischung besteht, die folgendes enthält:
      . 68 % einer Mischung an Dextrose und Glycerin, die höchstens ein Drittel an Glycerin enthält,
      . 23 % Saccharose,
      . 3 % Sorbitol,
      . 5 % Natriumchlorid,
      . 1 % Zitronensäure,
    - anschließend, Zerkleinern des so erhaltenen Gemenges durch Zerschneiden bei Raumtemperatur bis ein Brei erhalten wird;
    - schließlich, Pressen des Breis bei 30 bis 35° C, um einen gezuckerten Preßrückstand und einen Saft zu erhalten, den man anschließend in ein gebrauchsfertiges naturreines Öl und einen gebrauchsfertigen Sirup trennt.

## Claims

1. A process for obtaining juices, oils and cakes, in stable forms, by the pressing of fresh biological products, <u>characterized</u> in that it consists in :
   - firstly, adding to these fresh biological products, in an amount of the order of two times to two and a half times the quantity of water contained in these products, a depressor system composed of a mixture comprising dextrose, saccharose and salt, and in which:
     . the proportion by weight of dextrose is of the order of three times that of saccharose;
     . the weight ratio between the sugars and salt is between 7 and 7.5;
   - then subjecting the whole to a rapid, quick and exhaustive crushing action, in order to obtain a puree;
   - and finally, pressing this puree in order to obtain from it juices, oils and cakes, in stable forms.

2. The process as claimed in claim 1, wherein the fresh biological products are processed immediately after harvesting (plants) or picking.

3. The process as claimed in claim 1, wherein the rapid crushing of the mixture is carried out using shear action at room temperature.

4. The process as claimed in claim 1, wherein between one-quarter and one-half of the dextrose is replacled by glycerol.

5. The process as claimed in claim 1, wherein the depressor system also contains sorbitol and citric acid.

6.  The process as claimed in claim 1, wherein the depressor system contains by weight:
    - from 62.5% to 68%, preferably 64% of a mixture of dextrose and glycerol, containing at most one-third glycerol,
    - from 20 to 23% saccharose, preferably 20%,
    - 3% sorbitol
    - from 5 to 13.5% sodium chloride, preferably 12%,
    - 1% citric acid,
    the sum of these constituents being equal to 100%.

7.  The process as claimed in either of claims 4 and 6, wherein traces of sorbic acid and/or metabisulfite are added to the mixture during the crushing.

8.  The process as claimed in claim 1, wherein the pressing of the puree to extract from it stable juices, oils and cakes, is carried out by conventional techniques, at a temperature lower than 35°C, and preferably close to room temperature.

9.  The process as claimed in claim 1, wherein the starting fresh biological products are previously humidified.

10. A process for extracting a stable coconut juice, oil and cake, characterized in that it consists in :
    - crushing fresh coconut pulp;
    - the order of mixing with this coconut in amount of the order of two times to two and a half times the quantity of water contained in it, a depressor system composed of a mixture containing :
        . 68% of a mixture of dextrose and glycerol, containing at most one-third glycerol,
        . 23% saccharose,
        . 3% sorbitol,
        . 5% sodium chloride,
        . 1% citric acid,
    - then crushing using shear action, at room temperature, the mixture thus obtained until a puree is obtained;
    - finally, pressing this puree at a temperature of 30 to 35°C, in order to obtain a sweet cake and a juice which is then separated into virgin oil and a syrup which are ready to use.